Europäisches Patentamt

(19) European Patent Office

Office européen des brevets

(11) Publication number: **0 033 035**
**B1**

(12) **EUROPEAN PATENT SPECIFICATION**

(45) Date of publication of patent specification: **07.03.84**

(51) Int. Cl.³: **H 01 R 13/52**

(21) Application number: **80304671.3**

(22) Date of filing: **22.12.80**

(54) **Fluid-tight electrical connector device.**

(30) Priority: **26.12.79 JP 181787/79**

(43) Date of publication of application:
**05.08.81 Bulletin 81/31**

(45) Publication of the grant of the patent:
**07.03.84 Bulletin 84/10**

(84) Designated Contracting States:
**DE FR GB IT NL SE**

(56) References cited:
**GB - A - 948 159**
**GB - A - 2 019 131**
**US - A - 3 092 431**
**US - A - 3 294 993**
**US - A - 3 710 002**
**US - E - 22 086**

(73) Proprietor: **SUMITOMO ELECTRIC INDUSTRIES LIMITED**
**No. 15, Kitahama 5-chome Higashi-ku**
**Osaka-shi Osaka (JP)**

(73) Proprietor: **OSAKA GAS CO., LTD**
**1 Hiranomachi 5-chome, Higashi-ku**
**Osaka-shi, Osaka, 541 (JP)**

(72) Inventor: **Kashimoto, Hiroo**
**c/o Osaka Gas Co Ltd 1 Hirano-machi 5-chome**
**Higashi-ku Osaka-shi, Osaka (JP)**
Inventor: **Kosa, Tadatoshi**
**c/o Osaka Gas Co Ltd 1 Hirano-machi 5-chome**
**Higashi-ku Osaka-shi, Osaka (JP)**
Inventor: **Inoue, Akihiko c/o Sumitomo Electric**
**Ind. Ltd**
**Osaka Works 1-3 Shimaya 1-chome**
**Konohana-ku, Osaka-shi Osaka (JP)**
Inventor: **Yamamoto, Shigemitu Sumitomo**
**Electric Ind.Ltd**
**Osaka Works 1-3 Shimaya 1-chome**
**Konohana-ku, Osaka-shi Osaka (JP)**
Inventor: **Kuroishi, Katahiko Sumitomo Electric**
**Ind. Ltd**
**15 Kitahama, 5-chome**
**Higashi-ku, Osaka-shi Osaka (JP)**

Courier Press, Leamington Spa, England.

(74) Representative: **Pearce, Anthony Richmond**
**Marks & Clerk Alpha Tower Suffolk Street**
**Queensway**
**Birmingham B1 1TT (GB)**

2

## Fluid-tight electrical connector device

The present invention relates to a fluid-tight electrical connector device. Such a device is particularly adapted for use in an electrical cable circuit for supplying external electric current to a motor of a pump located in a storage tank or vessel. Such a pump may be provided for pumping liquefied gas having an ultra-low temperature such as LPG or LNG stored in the tank. The fluid-tight device provides high efficiency and easy assembly with a compact, low-cost structure.

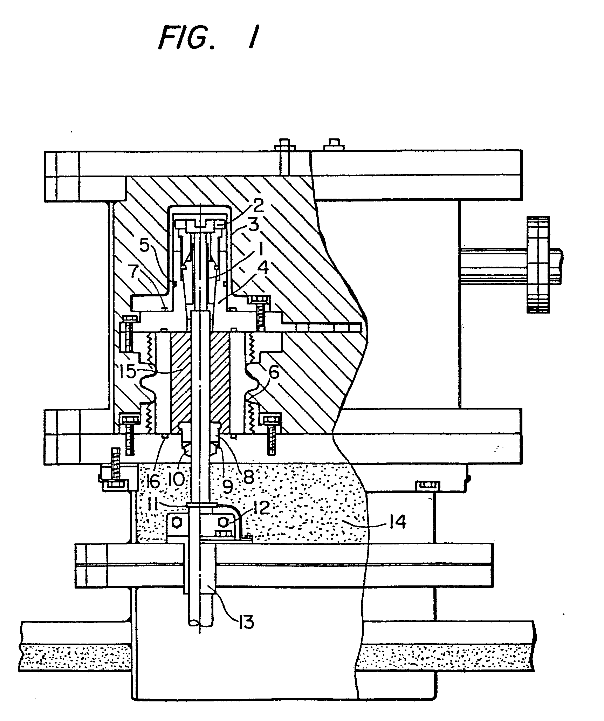

Referring now to Fig. 1 of the accompanying drawings, there is shown, partly in section, the essential parts of a conventional fluid-tight electrical connector, for low temperature applications. In this electrical connector, a cable passes through a series of flanges and is electrically connected at a connecting region with a metallic electrical connector member 4. In this connecting region the cable has a partially exposed conductor which is inserted into the member 4 and electrically connected thereto by wedges 1 and a metallic wedge-clamping member 2. A sheathed tube 6 including a metallic insert member is interposed between the electrical connector and an adjacent one of the flanges which is connected to earth to provide electrical insulation between the member 4 and earth. The tube 6 is filled with a sealing compound 15 to provide a fluid-tight structure and is sealed with the flange via an O-ring 16. The assembly of member 4, wedges 1 and wedge-clamping member 2 are covered by a protective cap 3 sealed by O-rings 5 and 7 against the member 4. The cable passes through said one of the flanges and is sealed therewith by a packing 10, gland 9 and clamping member 8. The cable is clamped at a clamping region by a clamp 12 fixed to the cable and to another flange.

The space between the flanges associated with the packing 10 and clamp 12, respectively, is filled with a silicone sealing compound 14. An earthing strap 11 is provided around the cable and secured to the clamp 12.

A spacer 13 surrounds the cable as it passes through said another flange.

This structure of Fig. 1 requires a large number of components and is bulky.

US—E—22 086 discloses a fluid-tight electrical connector device which is applicable to oil-filled transformers where the requirement to provide a fluid-tight seal under the ultra-low temperature conditions encountered with LPG or LNG is not necessary. The connector device of US—E—22 086 has an insulator sleeve through which an electrically conductive rod extends. A sealing member is disposed in a recess in the sleeve and engages an enlarged head portion of the rod within the sleeve. The enlarged head portion of the rod is internally screw threaded and is engaged by an externally screw threaded stud carrying a terminal clamp thereon for engagement with an external conductor. The insulator sleeve has an external flange thereon which is clamped against a side wall of a housing of the transformer. A clamping nut having a flange apertured to receive the insulator engages an externally screw-threaded sleeve welded to the side wall to clamp the flange of the insulator against the side wall of the housing so as to effect a fluid tight seal. With such an arrangement, the seal between the rod and the insulator sleeve does not perform particularly well at ultra-low temperatures.

It is a primary object of the invention to provide a fluid-tight electrical connector device which is compact and uses fewer components than the above-described prior art structure of Fig. 1 and which is more effective under low temperature conditions than the connection device of US—E—22 086.

In accordance with the present invention, there is provided a fluid-tight electrical connector device for connection to a cable used under low temperature conditions, said device comprising an electrically insulating sleeve (33) having an external flange (132); an electrically conductive rod (34) passing through the sleeve (33), a sealing member (43) interposed between the sleeve (33) and the rod (34) a main metal body (31) through which the sleeve (33) and rod (34) extend; and a metal support (32) secured to the main metal body (31) and the flange (132) of the sleeve (33), characterized in that the electrically insulating sleeve (33) has an internal screw thread (131) which is engaged by an external screw thread (141) on the rod (34), the sealing member (43) is interposed between the screw threads (131 and 141), and the metal support (32) is secured to the main metal body (31) by at least one bolt (35).

If desired, a packing may be interposed between the flange and the main metal body. Also, a heat-shrinkable tape can be wound around a portion of the insulating sleeve which would otherwise be exposed to the atmosphere.

Fig. 1 is a partially cut-away view of the conventional metal shielding and electrical connector described hereinabove;

Fig. 2 is an explanatory view of an LNG pump; and

Fig. 3 is a view of a fluid-tight electrical connector according to the invention for use under low temperature conditions.

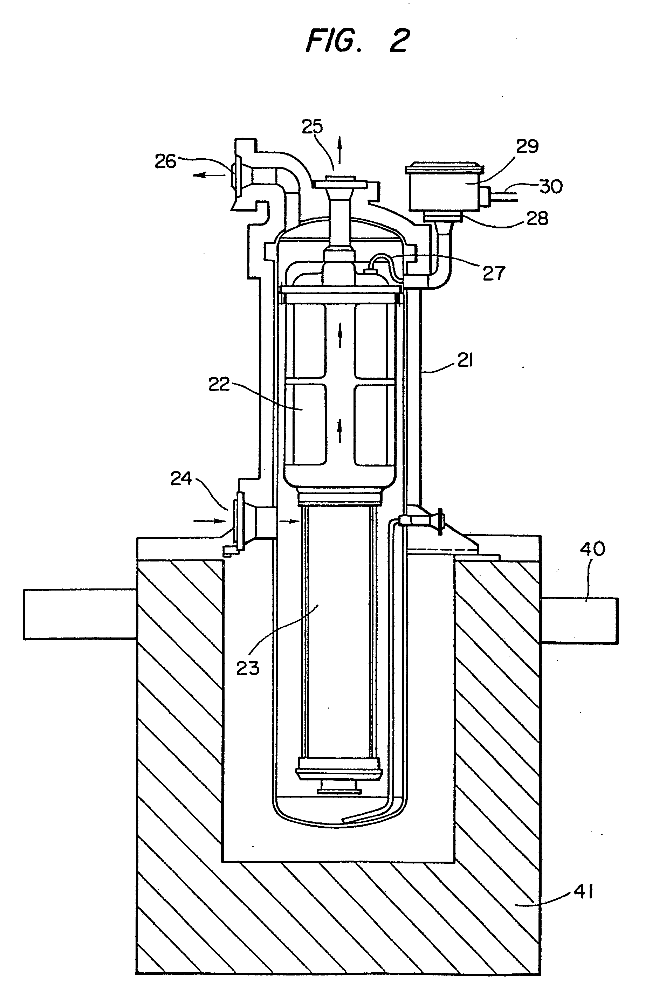

Referring now to Fig. 2, within a cooling jacket 21 is disposed a motor 22 driving a pump 23. In use, LNG is drawn from a storage tank through an inlet port 24 by the pump 23 and is discharged through an outlet port 25. A gas discharge port 26 permits gas to be discharged from the inside of the jacket 21. The motor 22 is an electric motor supplied via an ultra-low temperature cable 27, a fluid-tight electrical connector 28, a connection box 29 and an external power supply cable 30.

The pump has a base 41 and reference numeral 40 designates a ground surface.

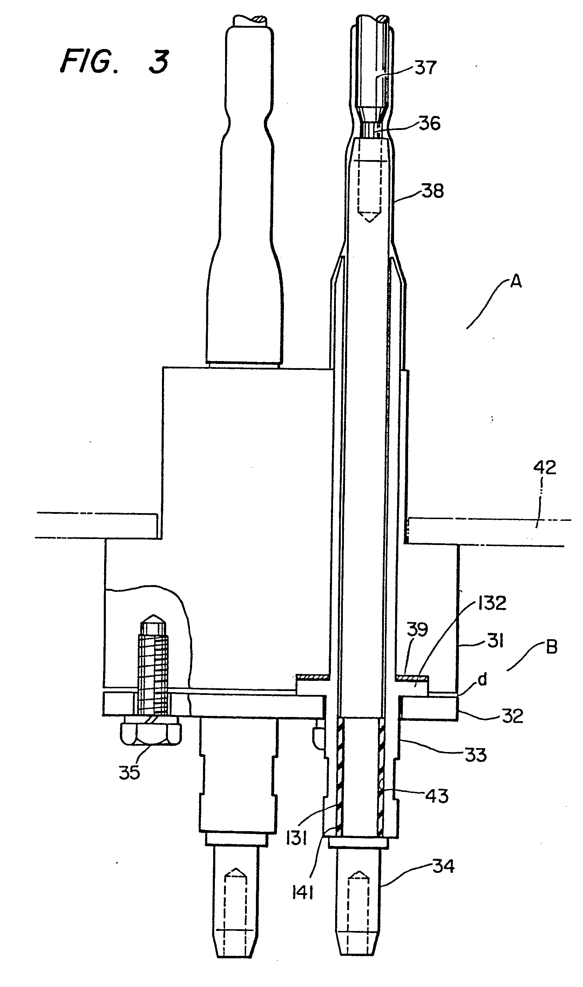

The fluid-tight electrical connector 28 is illustrated in detail in Fig. 3.

Referring now to Fig. 3, an electrically insulating sleeve 33 is formed with a female thread 131 on its inner peripheral surface. An electrically conductive rod 34 has on its outer peripheral surface a male thread 141 which engages the female thread 131 via a sealing member 43 provided to maintain the fluid-tightness of the coupled electrically conductive rod 34 and insulating sleeve 33.

A main metal body 31 is formed with a seat portion to provide fitting engagement with a flange 132 of the insulating sleeve 33. Thus, the assembly of electrically insulating sleeve 33 and the electrically conductive rod 34 is fitted to the main metal body 31. A metal support 32 is formed with a hole having a diameter larger than the outer diameter of the insulating sleeve 33. The metal support 32 is passed over the insulating sleeve until it abuts the flange 132.

A gap $d$ is initially provided between the metal support 32 and the main metal body 31. The gap is closed by tightening a fastening bolt 35 to fasten the metal support 32 to the main metal body 31 so that a packing effect is provided between the flange 132 of the insulating sleeve and the main metal body 31 thus to provide a fluid-tight structure. A packing 39 can be provided if desired.

The connection between the conductors 36 of the cable and the electrically conductive rod 34 is achieved by soldering, use of a bolt or by compression. A portion A, which is exposed to atmosphere, is covered with heat-shrinkable tube 38 along an insulator 37 of the cable and the insulating sleeve 33 in order to prevent damage due to condensation of moisture. A bottom wall 42 of the connection box 29 forms a boundary between the portion A and a low temperature portion B.

With this structure, the choice of the material of the insulating sleeve is extremely important. It has been experimentally proven that glass-reinforced epoxy resin and tetrafluoroethylene polymer exhibit desirable results.

The connector of Fig. 3 is of an extremely simple structure and compact size, and is easily assembled at low cost.

## Claims

1. A fluid-tight electrical connector device for connection to a cable used under low temperature conditions said device comprising an electrically insulating sleeve (33) having an external flange (132); an electrically conductive rod (34) passing through the sleeve (33); a sealing member (43) interposed between the sleeve (33) and the rod (34); a main metal body (31) through which the sleeve (33) and rod (34) extend; and a metal support (32) secured to the main metal body (31) and the flange (132) of the sleeve (33), characterized in that the electrically insulating sleeve (33) has an internal screw thread (131) which is engaged by an external screw thread (141) on the rod (34), the sealing member (43) is interposed between the screw threads (131 and 141), and the metal support (32) is secured to the main metal body (31) by at least one bolt (35).

2. A device as claimed in claim 1, wherein a packing (39) is interposed between said flange (132) and said metal body (31).

3. A device as claimed in claim 1 or 2, wherein a heat-shrinkable tube (38) is provided over an otherwise exposed portion of the insulating sleeve (33).

4. A device as claimed in claim 1, 2 or 3, having a cable conductor (36) connected to said rod (34) by soldering.

5. A device as claimed in claim 1, 2 or 3, having a cable conductor (36) secured to said rod (34) by means of a bolt.

6. A device as claimed in claim 1, 2 or 3, having a cable conductor (36) secured to said rod (34) by compression.

7. A device as claimed in any preceding claim, wherein said insulating sleeve is made of glass-reinforced epoxy resin and tetrafluoroethylene polymer.

## Patentansprüche

1. Flüssigkeitsdichte elektrische Anschlußeinrichtung für den Anschluß an ein Kabel, welche unter Niedrigtemperatur-Bedingungen benutzt wird, mit einer einen äußeren Flansch (132) aufweisenden elektrisch isolierenden Hülse (33), einem die Hülse (33) durchsetzenden elektrisch leitfähigen Stab (34), einem zwischen der Hülse (33) und dem Stab (34) angeordneten Dichtglied (43), einem Haupt-Metallkörper (31), durch welchen sich die Hülse (33) und der Stab (34) erstrecken, und einem an dem Haupt-Metallkörper (31) und dem Flansch (132) der Hülse (33) befestigten Metallhalter (32), dadurch gekennzeichnet, daß die elektrisch isolierende Hülse (33) ein inneres Schraubgewinde (131) aufweist, in welches ein äußeres Schraubgewinde (141) an dem Stab (34) eingreift, daß das Dichtglied (43) zwischen den Schraubgewinden (131 und 141) angeordnet und daß der Metallhalter (32) mittels wenigstens eines Bolzens (35) an dem Haupt-Metallkörper (31) befestigt ist.

2. Einrichtung nach Anspruch 1, in welcher eine Dichtung (39) zwischen dem Flansch (132) und dem Metallkörper (31) angeordnet ist.

3. Einrichtung nach Anspruch 1 oder 2, in welcher ein heiß-schrumpfbarer Schlauch (38) auf einem andernfalls freiliegenden Abschnitt der isolierenden Hülse (33) angeordnet ist.

4. Einrichtung nach Anspruch 1, 2 oder 3 mit einem Kabelleiter (36), welcher mit dem Stab (34) durch Löten verbunden ist.

5. Einrichtung nach Anspruch 1, 2 oder 3 mit einem Kabelleiter (36), welcher mittels eines Bolzens an dem Stab (34) befestigt ist.

6. Einrichtung nach Anspruch 1, 2 oder 3 mit einem Kabelleiter (36), welcher mittels Kompression an dem Stab (34) befestigt ist.

7. Einrichtung nach einem der vorstehenden Ansprüche, in welcher die isolierende Hülse aus glas-verstärktem Epoxydharz und Tetrafluoräthylen-Polymer besteht.

**Revendications**

1. Dispositif de connexion électrique étanche aux fluides destiné à la connexion à un câble utilisé dans des conditions de basse température, ledit dispositif comprenant un manchon électriquement isolant (33) ayant un collet externe (132); une tige électriquement conductrice (34) passant dans le manchon (33); un organe d'étanchéité (43) interposé entre le manchon (33) et la tige (34); un corps métallique principal (31) dans lequel s'étendent le manchon (33) et la tige (34), et un support métallique (32) fixé au corps métallique principal (31) et au collet (132) du manchon (33), caractérisé en ce que le manchon électriquement isolant (33) présente un taraudage interne (131) qui est vissé sur un filetage externe (141) de la tige (34), l'organe d'étanchéité (43) étant interposé entre le taraudage (131) et le filetage (141), et le support métallique (32) étant fixé au corps métallique principal (31) par au moins un boulon (35).

2. Dispositif tel que revendiqué dans la revendication 1, dans lequel une garniture (39) est interposée entre ledit collet (132) et ledit corps métallique (31).

3. Dispositif tel que revendiqué dans la revendication 1 ou 2, dans lequel un tube thermo-rétractable (38) est disposé sur une partie qui serait sinon exposée du manchon isolant (33).

4. Dispositif tel que revendiqué dans les revendications 1, 2 ou 3, ayant un conducteur (36) en forme de cable connecté à ladite tige (34) par soudure.

5. Dispositif tel que revendiqué dans les revendications 1, 2 ou 3, ayant un conducteur (36) en forme de cable fixé à ladite tige (34) au moyen d'un boulon.

6. Dispositif tel que revendiqué dans les revendications 1, 2 ou 3, ayant un conducteur (36) en forme de cable fixé à ladite tige (34) par compression.

7. Dispositif tel que revendiqué dans l'une quelconque des revendications précédentes, dans lequel ledit manchon isolant est réalisé en résine epoxyde armée de verre et en polymère de tétrafluoroéthylène.

FIG. 1

# FIG. 2

FIG. 3